# EUROPEAN PATENT APPLICATION

(11) **EP 3 936 319 A1**
(43) Date of publication of application: **12.01.2022**
(21) Application number: 21176375.0
(22) Date of filing: 27.05.2021
(51) Int. Cl.: B29D 11/00, G02B 1/00, G02B 1/04

(54) **PRESCRIPTION LENS MANUFACTURING**

(30) Priority: 10.07.2020 US 202016296450
(71) Applicant: Facebook Technologies, LLC, Menlo Park, CA 94025 (US)
(72) Inventor: JENKINS, Kurt, Menlo Park, 94025 (US); SHARMA, Robin, Menlo Park, 94025 (US); HATZILIAS, Karol, Menlo Park, 94025 (US)
(74) Representative: Murgitroyd & Company

(57) **Abstract**

A method of making a customized lens includes providing a first substrate having a first surface, the first surface being a non-flat surface; placing an optical film in contact with the first surface; bringing a layer of a first material into contact with the optical film; and curing the layer of the first material to form a lens. The optical film has a lower surface roughness than the first surface.

## Description

### TECHNICAL FIELD

This relates generally to optical components, and more specifically to optical components used in head-mounted display devices.

### BACKGROUND

Head-mounted display devices (also called herein head-mounted displays) are gaining popularity as a means for providing visual information to users.

For users who normally wear vision correction prescription lenses, it can be convenient if a head-mounted display device can be configured for each user's prescription. However, making high quality custom lenses can be expensive and time consuming.

### SUMMARY

Accordingly, there is a need for rapid manufacturing of custom prescription lenses that can be easily incorporated into head-mounted display devices. Such prescription lenses can enable more compact and lightweight head-mounted displays. Compact head-mounted display devices having customized built-in prescription lenses would also improve user satisfaction with such devices.

The methods and systems disclosed herein allow customized prescription lens to be quickly fabricated for augmented reality (AR) or virtual reality (VR) glasses. Also described herein are the methods and systems that allow other optical components (e.g., illumination elements) and coatings to be manufactured together with the customized prescription lens to form an optical stack.

While additive manufacturing techniques (e.g., stereolithography (SLA), selective laser sintering (SLS), etc.) are used in the disclosed systems and methods, these techniques are not used to directly print the prescription lens. Rather, additive manufacturing generates a mold having a surface profile that corresponds to a particular prescription. In some embodiments, the prescription includes one or more of: sphere, cylinder, and axis. In some configurations, the mold does not have an optically specular surface.

In accordance with some embodiments, a method of making a customized lens includes providing a first substrate having a first surface, the first surface being a non-flat surface. In some embodiments, the first substrate is a mold, and the first surface is a free-form surface. The method includes placing an optical film in contact with the first surface. In some embodiments a substantial portion (e.g., more than 50%, 70%, 90%, 95%, or 99%) of the non-flat surface is in contact with the optical film. In some embodiments, the optical film is elastic (or elastomeric) so that the optical film can stretch while the optical film is placed over the first surface (e.g., during vacuum forming). The method includes bringing a layer of a first material into contact with the optical film; and curing the layer of the first material to form a lens. The optical film has a lower surface roughness than the first surface. In some embodiments, the optical film is a plastic film and a surface roughness of plastic film is better than 20 nm root-mean-square (RMS).

In accordance with some embodiments, a method includes providing a first optical element; and forming a lens according to any method described herein while the first material is in contact with the first optical element so that the formed lens is integrated with the first optical element.

In accordance with some embodiments, a lens includes an optical film defining a first surface of the lens, the first surface being a non-flat surface; and a cured material in contact with the first surface and defining a second surface of the lens opposite to the first surface.

In accordance with an aspect of the present disclosure, there is provided a method of making a customized lens, the method comprising: providing a first substrate having a first surface, the first surface being a non-flat surface; placing an optical film in contact with the first surface; bringing a layer of a first material into contact with the optical film; and curing the layer of the first material to form a lens, wherein the optical film has a lower surface roughness than the first surface.

In some embodiments, the method may further comprise additively manufacturing the first substrate having the first surface.

In some embodiments, the first substrate may be porous.

In some embodiments, channels may be defined in the first substrate.

In some embodiments, the method may include applying a vacuum through the first substrate.

In some embodiments, the first material may include one or more monomers.

In some embodiments, the optical film may be made of a second material, and the first material subsequent to the curing and the second material have matching refractive indices.

In some embodiments, the optical film may include at least one of: poly-methyl methacrylate (PMMA), cyclic olefin copolymer (COC), cyclo-olefin Polymer (COP), or polycarbonate.

In some embodiments, the first material may include at least one of: poly-methyl methacrylate (PMMA), cyclic olefin copolymer (COC), cyclo-olefin Polymer (COP), polycarbonate, polystyrene, or polyurethanes.

In some embodiments, the optical film may include an optically specular surface.

In some embodiments, a thickness of the optical film may be 100 microns or greater.

In some embodiments, the thickness of the optical film may be a function of a curvature of the first surface.

In some embodiments, the method may further comprise placing a second substrate having a second surface into contact with the layer of the first material.

In some embodiments, the second surface may form an optically specular flat surface of the lens.

In some embodiments, curing may comprise propagating ultraviolet light within the second substrate via total internal reflection.

In some embodiments, the method may further comprise depositing an optical coating on the optical film.

In accordance with a further aspect of the disclosure, there is provided a method, comprising: providing a first optical element; and forming a lens according to the method of the first aspect while the first material is in contact with the first optical element so that the formed lens is integrated with the first optical element.

In accordance with a further aspect of the disclosure, there is provided a lens, comprising: an optical film defining a first surface of the lens, the first surface being a non-flat surface; and a cured material in contact with the first surface and defining a second surface of the lens opposite to the first surface.

In some embodiments, a thickness of the optical film may be 100 microns or greater.

In some embodiments, the cured material and the optical film may have matching refractive indices.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

For a better understanding of the various described embodiments, reference should be made to the Description of Embodiments below, in conjunction with the following drawings in which like reference numerals refer to corresponding parts throughout the figures.
Figure 1 is a perspective view of a display device in accordance with some embodiments.
Figure 2 is a block diagram of a system including a display device in accordance with some embodiments.
Figure 3 is an isometric view of a display device in accordance with some embodiments.
Figure 4A is a perspective view of a first substrate defining a mold in accordance with some embodiments.
Figure 4B is a schematic diagram illustrating a cross-sectional view of the first substrate at a first time point in the manufacture of the first substrate, in accordance with some embodiments.
Figure 4C is a schematic diagram illustrating a cross-sectional view of the first substrate at a second time point, later than the first time point, in the manufacture of the first substrate, in accordance with some embodiments.
Figure 4D is a schematic diagram illustrating a cross-sectional view of the first substrate at a third time point, later than the second time point, in the manufacture of the first substrate, in accordance with some embodiments.
Figure 4E is a schematic diagram illustrating a cross-sectional view of a plastic film placed on top of the first substrate from Figure 4D, in accordance with some embodiments.
Figure 4F is a schematic diagram illustrating a cross-sectional view of the plastic film in Figure 4E when a vacuum is applied to the plastic film, in accordance with some embodiments.
Figure 4G is a schematic view of a resin material disposed on top of the plastic film of Figure 4F, filling a concave portion of the first substrate, in accordance with some embodiments.
Figure 4H is a schematic view showing irradiation of the resin material from Figure 4G in accordance with some embodiments.
Figure 4I is a schematic view showing a top cover being placed into contact with the resin material from Figure 4G, prior to irradiation, in accordance with some embodiments.
Figure 4J is a schematic view of a custom lens formed from the resin of Figure 4G, in accordance with some embodiments.
Figure 5A shows a perspective view of a mold having a plurality of channels, in accordance with some embodiments.
Figure 5B shows a sectional view of the mold shown in Figure 5A.
Figure 5C is a schematic diagram illustrating a cross-sectional view of a porous mold, in accordance with some embodiments.
Figure 5D shows a perspective view and a cross-sectional view of a mold having a convex surface profile, in accordance with some embodiments.
Figure 6A shows a cross-sectional view of a mold and a relationship between a radius of curvature of the mold and a thickness of a plastic film used with the mold in accordance with some embodiments.
Figure 6B shows a cross-sectional view of an optical coating disposed on top of an elastic optical plastic film, in accordance with some embodiments.
Figure 7A shows a schematic view of a convex mold in accordance with some embodiments.
Figure 7B shows a schematic view of a thin optical plastic film disposed on the convex mold of Figure 7A in accordance with some embodiments.
Figure 7C shows a schematic view of the convex mold of Figure 7A being attached to a substrate having a plurality of channels in accordance with some embodiments.
Figure 7D shows a schematic view of the convex mold of Figure 7C being placed adjacent to a layer of resin in accordance with some embodiments.
Figure 7E shows a schematic view of the convex mold of Figure 7D in contact with a layer of resin during irradiation in accordance with some embodiments.
Figure 7F shows a custom lens formed from the processes described with respect to Figures 7A-7E in accordance with some embodiments.
Figure 8A shows a schematic diagram of radiation injected through a waveguide for curing a resin, in accordance with some embodiments.
Figure 8B shows a schematic diagram of curing a resin using a light sheet in accordance with some embodiments.
Figure 9 shows a system having an integrated eye-tracker/optical element and a custom prescription lens in accordance with some embodiments.
Figure 10 shows a method of manufacturing a custom lens, in accordance with some embodiments.

These figures are not drawn to scale unless indicated otherwise.

### DETAILED DESCRIPTION

Reference will now be made to embodiments, examples of which are illustrated in the accompanying drawings. In the following description, numerous specific details are set forth in order to provide an understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It will also be understood that, although the terms first, second, etc. are, in some instances, used herein to describe various elements, these elements should not be limited by these terms. These terms are used only to distinguish one element from another. For example, a first substrate could be termed a second substrate, and, similarly, a second substrate could be termed a first substrate, without departing from the scope of the various described embodiments. The first substrate and the second substrate are both substrates, but they are not the same substrate.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. The term "exemplary" is used herein in the sense of "serving as an example, instance, or illustration" and not in the sense of "representing the best of its kind."

Embodiments described herein may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured (e.g., real-world) content. The artificial reality content may include video, audio, haptic feedback, or some combination thereof, and any of which may be presented in a single channel or in multiple channels (such as stereo video that produces a three-dimensional effect to the viewer). Additionally, in some embodiments, artificial reality may also be associated with applications, products, accessories, services, or some combination thereof, that are used to, e.g., create content in an artificial reality and/or are otherwise used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

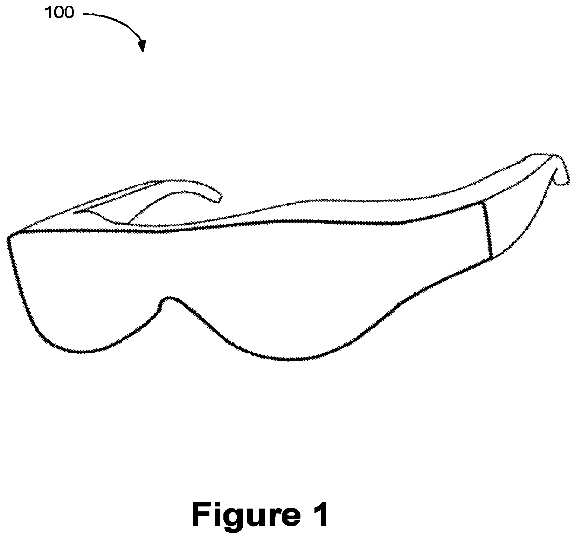

Figure 1 illustrates display device 100 in accordance with some embodiments. In some embodiments, display device 100 is configured to be worn on the head of a user (e.g., by having the form of spectacles or eyeglasses, as shown in Figure 1) or to be included as part of a helmet that is to be worn by the user. When display device 100 is configured to be worn on a head of a user or to be included as part of a helmet or headset, display device 100 is called a head-mounted display. Alternatively, display device 100 is configured for placement in proximity of an eye or eyes of the user at a fixed location, without being head-mounted (e.g., display device 100 is mounted in a vehicle, such as a car or an airplane, for placement in front of an eye or eyes of the user). As shown in Figure 1, display device 100 includes display 110. Display 110 is configured for presenting visual content (e.g., augmented reality content, virtual reality content, mixed reality content, or any combination thereof) to a user.

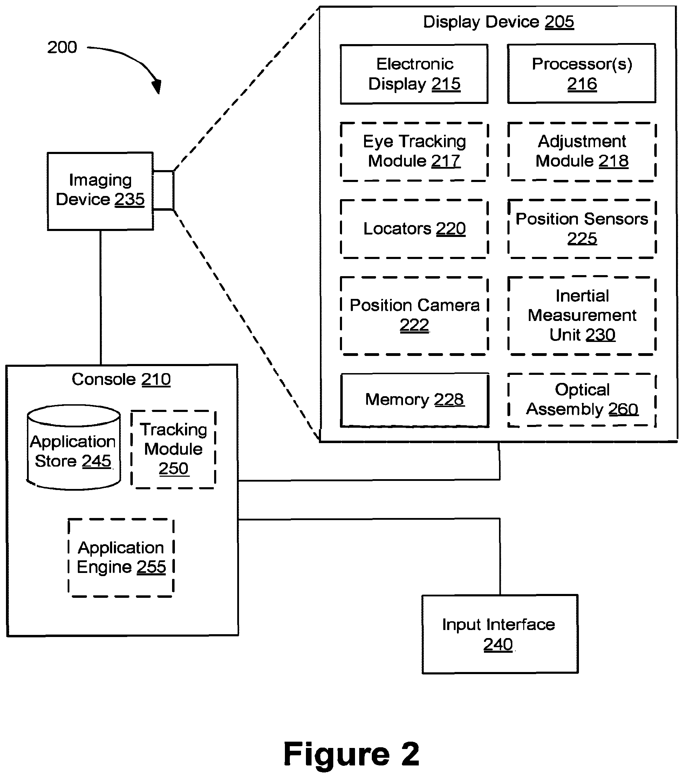

In some embodiments, display device 100 includes one or more components described below with respect to Figure 2. In some embodiments, display device 100 includes additional components not shown in Figure 2.

Figure 2 is a block diagram of system 200 in accordance with some embodiments. The system 200 shown in Figure 2 includes display device 205 (which corresponds to display device 100 shown in Figure 1), imaging device 235, and input interface 240 that are each coupled to console 210. While Figure 2 shows an example of system 200 including one display device 205, imaging device 235, and input interface 240, in other embodiments, any number of these components may be included in system 200. For example, there may be multiple display devices 205 each having an associated input interface 240 and being monitored by one or more imaging devices 235, with each display device 205, input interface 240, and imaging device 235 communicating with console 210. In alternative configurations, different and/or additional components may be included in system 200. For example, in some embodiments, console 210 is connected via a network (e.g., the Internet) to system 200 or is self-contained as part of display device 205 (e.g., physically located inside display device 205). In some embodiments, display device 205 is used to create mixed reality by adding in a view of the real surroundings. Thus, display device 205 and system 200 described here can deliver virtual reality, mixed reality, and/or augmented reality.

In some embodiments, as shown in Figure 1, display device 205 is a head-mounted display that presents media to a user. Examples of media presented by display device 205 include one or more images, video, audio, haptics, or some combination thereof. In some embodiments, audio is presented via an external device (e.g., speakers and/or headphones) that receives audio information from display device 205, console 210, or both, and presents audio data based on the audio information. In some embodiments, display device 205 immerses a user in a virtual environment.

In some embodiments, display device 205 also acts as an augmented reality (AR) headset. In these embodiments, display device 205 can augment views of a physical, real-world environment with computer-generated elements (e.g., images, video, sound, haptics, etc.). Moreover, in some embodiments, display device 205 is able to cycle between different types of operation. Thus, display device 205 operate as a virtual reality (VR) device, an AR device, as glasses or some combination thereof (e.g., glasses with no optical correction, glasses optically corrected for the user, sunglasses, or some combination thereof) based on instructions from application engine 255.

Display device 205 includes electronic display 215, one or more processors 216, eye tracking module 217, adjustment module 218, one or more locators 220, one or more position sensors 225, one or more position cameras 222, memory 228, inertial measurement unit (IMU) 230, or a subset or superset thereof (e.g., display device 205 with electronic display 215, one or more processors 216, and memory 228, without any other listed components). Some embodiments of display device 205 have different modules than those described here. Similarly, the functions can be distributed among the modules in a different manner than is described here.

One or more processors 216 (e.g., processing units or cores) execute instructions stored in memory 228. Memory 228 includes high-speed random access memory, such as DRAM, SRAM, DDR RAM, or other random access solid state memory devices; and may include non-volatile memory, such as one or more magnetic disk storage devices, optical disk storage devices, flash memory devices, or other non-volatile solid state storage devices. Memory 228, or alternately the non-volatile memory device(s) within memory 228, includes a non-transitory computer readable storage medium. In some embodiments, memory 228 or the computer readable storage medium of memory 228 stores programs, modules and data structures, and/or instructions for displaying one or more images on electronic display 215.

Electronic display 215 displays images to the user in accordance with data received from console 210 and/or processor(s) 216. In various embodiments, electronic display 215 may comprise a single adjustable electronic display element or multiple adjustable electronic displays elements (e.g., a display for each eye of a user).

In some embodiments, the display element includes one or more light emission devices and a corresponding array of emission intensity array. An emission intensity array is an array of electro-optic pixels, opto-electronic pixels, some other array of devices that dynamically adjust the amount of light transmitted by each device, or some combination thereof. These pixels are placed behind one or more lenses. In some embodiments, the emission intensity array is an array of liquid crystal based pixels in an LCD (a Liquid Crystal Display). Examples of the light emission devices include: an organic light emitting diode, an active-matrix organic light-emitting diode, a light emitting diode, some type of device capable of being placed in a flexible display, or some combination thereof. The light emission devices include devices that are capable of generating visible light (e.g., red, green, blue, etc.) used for image generation. The emission intensity array is configured to selectively attenuate individual light emission devices, groups of light emission devices, or some combination thereof. Alternatively, when the light emission devices are configured to selectively attenuate individual emission devices and/or groups of light emission devices, the display element includes an array of such light emission devices without a separate emission intensity array.

One or more lenses direct light from the arrays of light emission devices (optionally through the emission intensity arrays) to locations within each eyebox and ultimately to the back of the user's retina(s). An eyebox is a region that is occupied by an eye of a user located proximate to display device 205 (e.g., a user wearing display device 205) for viewing images from display device 205. In some cases, the eyebox is represented as a 10 mm x 10 mm square. In some embodiments, the one or more lenses include one or more coatings, such as anti-reflective coatings.

In some embodiments, the display element includes an infrared (IR) detector array that detects IR light that is retro-reflected from the retinas of a viewing user, from the surface of the corneas, lenses of the eyes, or some combination thereof. The IR detector array includes an IR sensor or a plurality of IR sensors that each correspond to a different position of a pupil of the viewing user's eye. In alternate embodiments, other eye tracking systems may also be employed.

Eye tracking module 217 determines locations of each pupil of a user's eyes. In some embodiments, eye tracking module 217 instructs electronic display 215 to illuminate the eyebox with IR light (e.g., via IR emission devices in the display element).

A portion of the emitted IR light will pass through the viewing user's pupil and be retro-reflected from the retina toward the IR detector array, which is used for determining the location of the pupil. Alternatively, the reflection off of the surfaces of the eye is also used to determine the location of the pupil. The IR detector array scans for retro-reflection and identifies which IR emission devices are active when retro-reflection is detected. Eye tracking module 217 may use a tracking lookup table and the identified IR emission devices to determine the pupil locations for each eye. The tracking lookup table maps received signals on the IR detector array to locations (corresponding to pupil locations) in each eyebox. In some embodiments, the tracking lookup table is generated via a calibration procedure (e.g., user looks at various known reference points in an image and eye tracking module 217 maps the locations of the user's pupil while looking at the reference points to corresponding signals received on the IR tracking array). As mentioned above, in some embodiments, system 200 may use other eye tracking systems than the embedded IR one described above.

Adjustment module 218 generates an image frame based on the determined locations of the pupils. In some embodiments, this sends a discrete image to the display such that will tile subimages together thus a coherent stitched image will appear on the back of the retina. Adjustment module 218 adjusts an output (i.e. the generated image frame) of electronic display 215 based on the detected locations of the pupils. Adjustment module 218 instructs portions of electronic display 215 to pass image light to the determined locations of the pupils. In some embodiments, adjustment module 218 also instructs the electronic display not to pass image light to positions other than the determined locations of the pupils. Adjustment module 218 may, for example, block and/or stop light emission devices whose image light falls outside of the determined pupil locations, allow other light emission devices to emit image light that falls within the determined pupil locations, translate and/or rotate one or more display elements, dynamically adjust curvature and/or refractive power of one or more active lenses in the lens (e.g., microlens) arrays, or some combination thereof.

Optional locators 220 are objects located in specific positions on display device 205 relative to one another and relative to a specific reference point on display device 205. A locator 220 may be a light emitting diode (LED), a corner cube reflector, a reflective marker, a type of light source that contrasts with an environment in which display device 205 operates, or some combination thereof. In embodiments where locators 220 are active (i.e., an LED or other type of light emitting device), locators 220 may emit light in the visible band (e.g., about 400 nm to 750 nm), in the infrared band (e.g., about 750 nm to 1 mm), in the ultraviolet band (about 100 nm to 400 nm), some other portion of the electromagnetic spectrum, or some combination thereof.

In some embodiments, locators 220 are located beneath an outer surface of display device 205, which is transparent to the wavelengths of light emitted or reflected by locators 220 or is thin enough to not substantially attenuate the wavelengths of light emitted or reflected by locators 220. Additionally, in some embodiments, the outer surface or other portions of display device 205 are opaque in the visible band of wavelengths of light. Thus, locators 220 may emit light in the IR band under an outer surface that is transparent in the IR band but opaque in the visible band.

IMU 230 is an electronic device that generates calibration data based on measurement signals received from one or more position sensors 225. Position sensor 225 generates one or more measurement signals in response to motion of display device 205. Examples of position sensors 225 include: one or more accelerometers, one or more gyroscopes, one or more magnetometers, another suitable type of sensor that detects motion, a type of sensor used for error correction of IMU 230, or some combination thereof. Position sensors 225 may be located external to IMU 230, internal to IMU 230, or some combination thereof.

Based on the one or more measurement signals from one or more position sensors 225, IMU 230 generates first calibration data indicating an estimated position of display device 205 relative to an initial position of display device 205. For example, position sensors 225 include multiple accelerometers to measure translational motion (forward/back, up/down, left/right) and multiple gyroscopes to measure rotational motion (e.g., pitch, yaw, roll). In some embodiments, IMU 230 rapidly samples the measurement signals and calculates the estimated position of display device 205 from the sampled data. For example, IMU 230 integrates the measurement signals received from the accelerometers over time to estimate a velocity vector and integrates the velocity vector over time to determine an estimated position of a reference point on display device 205. Alternatively, IMU 230 provides the sampled measurement signals to console 210, which determines the first calibration data. The reference point is a point that may be used to describe the position of display device 205. While the reference point may generally be defined as a point in space; however, in practice the reference point is defined as a point within display device 205 (e.g., a center of IMU 230).

In some embodiments, IMU 230 receives one or more calibration parameters from console 210. As further discussed below, the one or more calibration parameters are used to maintain tracking of display device 205. Based on a received calibration parameter, IMU 230 may adjust one or more IMU parameters (e.g., sample rate). In some embodiments, certain calibration parameters cause IMU 230 to update an initial position of the reference point so it corresponds to a next calibrated position of the reference point. Updating the initial position of the reference point as the next calibrated position of the reference point helps reduce accumulated error associated with the determined estimated position. The accumulated error, also referred to as drift error, causes the estimated position of the reference point to "drift" away from the actual position of the reference point over time.

Imaging device 235 generates calibration data in accordance with calibration parameters received from console 210. Calibration data includes one or more images showing observed positions of locators 220 that are detectable by imaging device 235. In some embodiments, imaging device 235 includes one or more still cameras, one or more video cameras, any other device capable of capturing images including one or more locators 220, or some combination thereof. Additionally, imaging device 235 may include one or more filters (e.g., used to increase signal to noise ratio). Imaging device 235 is optionally configured to detect light emitted or reflected from locators 220 in a field of view of imaging device 235. In embodiments where locators 220 include passive elements (e.g., a retroreflector), imaging device 235 may include a light source that illuminates some or all of locators 220, which retroreflect the light towards the light source in imaging device 235. Second calibration data is communicated from imaging device 235 to console 210, and imaging device 235 receives one or more calibration parameters from console 210 to adjust one or more imaging parameters (e.g., focal length, focus, frame rate, ISO, sensor temperature, shutter speed, aperture, etc.).

Input interface 240 is a device that allows a user to send action requests to console 210. An action request is a request to perform a particular action. For example, an action request may be to start or end an application or to perform a particular action within the application. Input interface 240 may include one or more input devices. Example input devices include: a keyboard, a mouse, a game controller, data from brain signals, data from other parts of the human body, or any other suitable device for receiving action requests and communicating the received action requests to console 210. An action request received by input interface 240 is communicated to console 210, which performs an action corresponding to the action request. In some embodiments, input interface 240 may provide haptic feedback to the user in accordance with instructions received from console 210. For example, haptic feedback is provided when an action request is received, or console 210 communicates instructions to input interface 240 causing input interface 240 to generate haptic feedback when console 210 performs an action.

Console 210 provides media to display device 205 for presentation to the user in accordance with information received from one or more of: imaging device 235, display device 205, and input interface 240. In the example shown in Figure 2, console 210 includes application store 245, tracking module 250, and application engine 255. Some embodiments of console 210 have different modules than those described in conjunction with Figure 2. Similarly, the functions further described below may be distributed among components of console 210 in a different manner than is described here.

When application store 245 is included in console 210, application store 245 stores one or more applications for execution by console 210. An application is a group of instructions, that when executed by a processor, is used for generating content for presentation to the user. Content generated by the processor based on an application may be in response to inputs received from the user via movement of display device 205 or input interface 240. Examples of applications include: gaming applications, conferencing applications, video playback application, or other suitable applications.

When tracking module 250 is included in console 210, tracking module 250 calibrates system 200 using one or more calibration parameters and may adjust one or more calibration parameters to reduce error in determination of the position of display device 205. For example, tracking module 250 adjusts the focus of imaging device 235 to obtain a more accurate position for observed locators on display device 205. Moreover, calibration performed by tracking module 250 also accounts for information received from IMU 230. Additionally, if tracking of display device 205 is lost (e.g., imaging device 235 loses line of sight of at least a threshold number of locators 220), tracking module 250 re-calibrates some or all of system 200.

In some embodiments, tracking module 250 tracks movements of display device 205 using second calibration data from imaging device 235. For example, tracking module 250 determines positions of a reference point of display device 205 using observed locators from the second calibration data and a model of display device 205. In some embodiments, tracking module 250 also determines positions of a reference point of display device 205 using position information from the first calibration data. Additionally, in some embodiments, tracking module 250 may use portions of the first calibration data, the second calibration data, or some combination thereof, to predict a future location of display device 205. Tracking module 250 provides the estimated or predicted future position of display device 205 to application engine 255.

Application engine 255 executes applications within system 200 and receives position information, acceleration information, velocity information, predicted future positions, or some combination thereof of display device 205 from tracking module 250. Based on the received information, application engine 255 determines content to provide to display device 205 for presentation to the user. For example, if the received information indicates that the user has looked to the left, application engine 255 generates content for display device 205 that mirrors the user's movement in a virtual environment. Additionally, application engine 255 performs an action within an application executing on console 210 in response to an action request received from input interface 240 and provides feedback to the user that the action was performed. The provided feedback may be visual or audible feedback via display device 205 or haptic feedback via input interface 240.

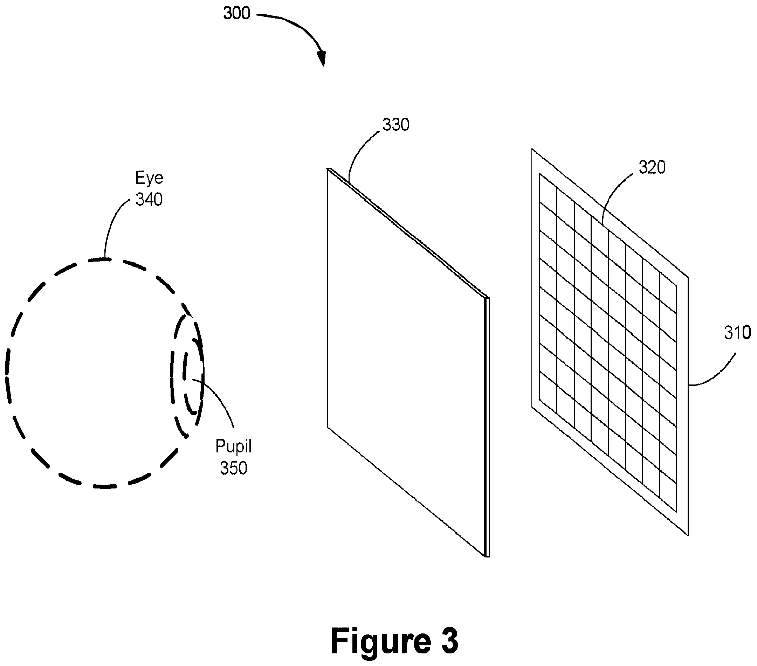

Figure 3 is an isometric view of display device 300 in accordance with some embodiments. In some other embodiments, display device 300 is part of some other electronic display (e.g., digital microscope, etc.). In some embodiments, display device 300 includes light emission device array 310 and one or more lenses 330. In some embodiments, display device 300 also includes an emission intensity array and an IR detector array.

Light emission device array 310 emits image light and optional IR light toward the viewing user. Light emission device array 310 may be, e.g., an array of LEDs, an array of microLEDs, an array of OLEDs, or some combination thereof. Light emission device array 310 includes light emission devices 320 that emit light in the visible light (and optionally includes devices that emit light in the IR). In some embodiments, a microLED includes an LED with an emission area characterized by a representative dimension (e.g., a diameter, a width, a height, etc.) of 100 µm or less (e.g., 50 µm, 20 µm, etc.). In some embodiments, a microLED has an emission area having a shape of a circle or a rectangle.

The emission intensity array is configured to selectively attenuate light emitted from light emission array 310. In some embodiments, the emission intensity array is composed of a plurality of liquid crystal cells or pixels, groups of light emission devices, or some combination thereof. Each of the liquid crystal cells is, or in some embodiments, groups of liquid crystal cells are, addressable to have specific levels of attenuation. For example, at a given time, some of the liquid crystal cells may be set to no attenuation, while other liquid crystal cells may be set to maximum attenuation. In this manner the emission intensity array is able to control what portion of the image light emitted from light emission device array 310 is passed to the one or more lenses 330. In some embodiments, display device 300 uses the emission intensity array to facilitate providing image light to a location of pupil 350 of eye 340 of a user, and minimize the amount of image light provided to other areas in the eyebox.

One or more lenses 330 receive the modified image light (e.g., attenuated light) from the emission intensity array (or directly from light emission device array 310), and shifted by one or more beam shifters 360, and direct the shifted image light to a location of pupil 350.

An optional IR detector array detects IR light that has been retro-reflected from the retina of eye 340, a cornea of eye 340, a crystalline lens of eye 340, or some combination thereof. The IR detector array includes either a single IR sensor or a plurality of IR sensitive detectors (e.g., photodiodes). In some embodiments, the IR detector array is separate from light emission device array 310. In some embodiments, the IR detector array is integrated into light emission device array 310.

In some embodiments, light emission device array 310 and the emission intensity array make up a display element. Alternatively, the display element includes light emission device array 310 (e.g., when light emission device array 310 includes individually adjustable pixels) without the emission intensity array. In some embodiments, the display element additionally includes the IR array. In some embodiments, in response to a determined location of pupil 350, the display element adjusts the emitted image light such that the light output by the display element is refracted by one or more lenses 330 toward the determined location of pupil 350, and not toward other locations in the eyebox.

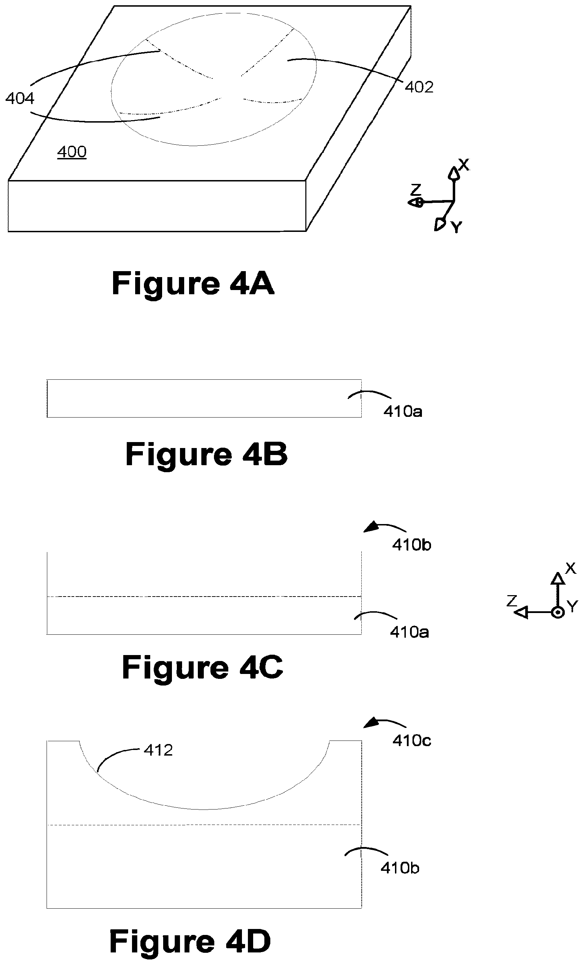

Figure 4A is a schematic diagram of a mold 400 having a concave surface 402. Dashed lines 404 denote curved portions of the concave surface 402. The mold 400 is used to product a lens having a surface profile complementary to the surface 402 of the mold 400. For example, the concave surface 402 of the mold 400 produces a lens having a complementary convex surface. Such lens may be used to correct and/or compensate for optical aberrations in an eye of a user of the lens. For example, the lens with the convex surface may be a converging lens having a positive dioptric value and generally corrects hyperopia (farsightedness) or to allow people with presbyopia to read at close range.

In some embodiments, the concave surface 402 includes a surface that is used to form a customized lens for correcting/compensating for specific optical aberrations in a user's eye. In some embodiments, the concave surface 402 is a concave spherical surface. In some embodiments, the concave surface 402 is a concave aspherical surface. In some embodiments, the concave surface 402 is a freeform surface. A freeform surface may have no translational or rotational symmetry about any of axes normal to the mean plane of the surface. In some embodiments, the concave surface 402 has a surface profile that places cylindrical power oriented along a particular axis. A lens made with such surface profile may be used to correct for astigmatism. In some embodiments, the concave surface 402 has a surface profile that corrects for both myopia and astigmatism.

Figures 4B to 4D show a mold formed using additive manufacturing processes (e.g., 3D printing). Figure 4B shows a planar slab 410a extending in the y-z plane that is incrementally built up (e.g., layer by layer, each layer extending in the y-z plane) along the x-direction. Figure 4C shows a thicker planar slab 410b built up from the planar slab 410a. The planar slab 410b has a greater thickness along the x-direction compared to the slab 410a. In some embodiments, the planar slab 410b is composed of the same material as the planar slab 410a. In some embodiments, the planar slab 410b includes one or more additional materials compared to the planar slab 410a, or fewer materials compared to the planar slab 410a. In some embodiments, an additional material causes a spatial variation in a porosity of the mold. In some embodiments, a region of the mold having a larger thickness (e.g., having more material) also has a higher porosity. In some embodiments, additional gaps (e.g., channels, spacing, holes) are introduced in the mold to facilitate air flow through the mold.

Figure 4D shows a mold 410c having a curved surface profile 412. In some embodiments, the curved surface 412 is formed by selective deposition of material over the mold planar slab 410b (e.g., depositing less material or not depositing material in certain regions over the mold 410b while depositing material in certain other regions over the mold 410b). The curved profile 412 is used to produce a lens that compensates for and/or corrects optical aberrations in an eye of a user of the lens.

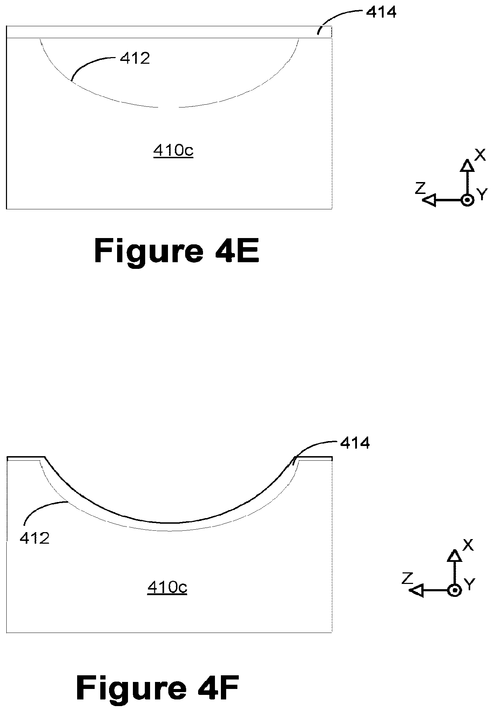

Figure 4E shows a schematic diagram of a thin film 414 disposed on the mold 410c. In some embodiments, the thin film 414 has some structural rigidity such that it does not contact the curved surface 412 (or at least does not contact a substantial portion of the curved surface 412, such as at least 50%, 60%, 70%, 80%, 90%, 95%, 99%, or 100% of the curved surface 412, or a center portion of the curved surface 412) before a vacuum is applied to the mold 410c and the thin film 414. In some embodiments, the thin film 414 is between 100-500 micron thick. In some embodiments, the thin film 414 is made of polycarbonate, cyclic olefin copolymer (COC), cyclic olefin polymer (COP), or poly(methyl methacrylate) (PMMA). In some embodiments, 250- 300 micron thick films of PMMA are used. PMMA films in that thickness range are very flat. In some cases, PMMA films may be formed without significant internal strain. As a result, an even thinner PMMA film is used in some embodiments. In some embodiments, channels are defined within the mold 410c, allowing a vacuum to be provided to a cavity between the curved surface 412 and the thin film 414 so that the thin film 414 can be brought into contact with the curved surface 412. In some embodiments, the mold 410c is porous and no additional channels are defined in it.

In Figure 4F, after a vacuum is applied to a cavity between the thin film 414 and the mold 410c, the thin film 414 is pulled toward, and is brought into contact with, the curved surface 412. In some embodiments, a substantial portion (e.g., more than 50%, 70%, 90%, 95%, or 99%) of the curved surface 412 is in contact with the thin film 414. In some embodiments, a center portion (e.g., an apex) of the curved surface 412 is in contact with the thin film 414. In some embodiments, the thin film 414 is elastic (or elastomeric) so that the thin film stretches while it is placed over the curved surface 412 (e.g., during vacuum forming). In some embodiments, the thin film 414 is a plastic film and a surface roughness of plastic film is better than 20 nm RMS.

As used herein, a vacuum refers to a condition where the gas pressure (e.g., an air pressure) is less than the atmospheric pressure, typically less than 760 Torr. In some embodiments, the vacuum has a pressure less than 700, 600, 500, 400, 300, 200, 100, 10, 1, 0.1, 0.01, 10⁻³ , 10⁻⁴ , 10⁻⁵ , 10⁻⁶ , 10⁻⁷, 10⁻¹, 10⁻⁹ , 10⁻¹⁰, 10⁻¹¹, 10⁻¹², or 10^{- 13} Torr.

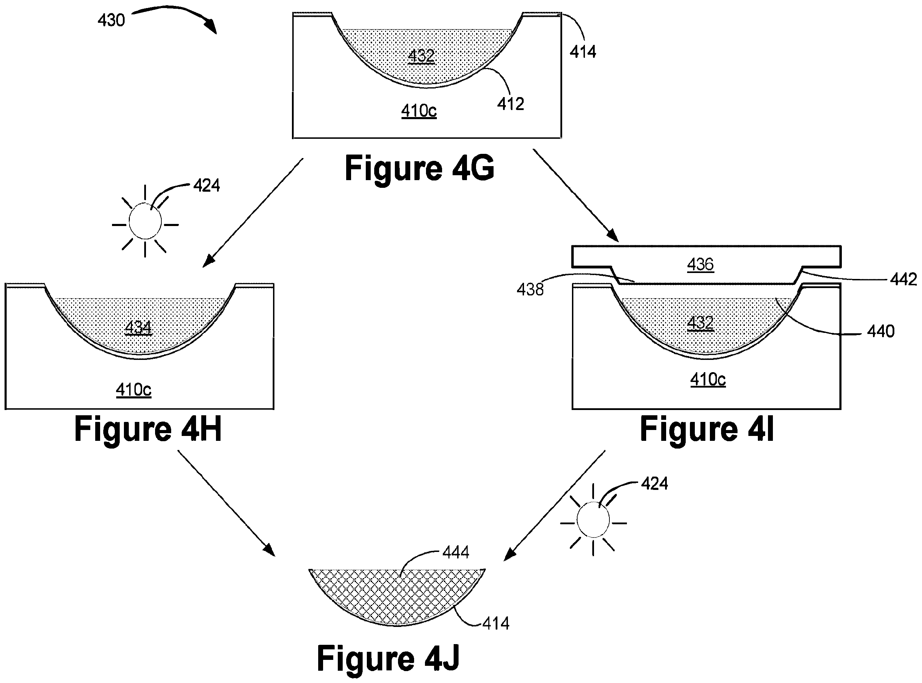

Figures 4G - 4J show methods 430 of forming a custom lens. In Figure 4G, a resin material 432 is introduced into the concave cavity in the mold 410c, shown in Figure 4F. The resin material 432 is in contact with the thin film 414 disposed on top of the concave surface 412 of the mold 410c. The resin material 432 may include polycarbonates, PMMA, COC, COP, or any combination thereof. In some embodiments, lens tinting chemicals are mixed into the resin material 432. Such lens tinting chemicals allow the lens to have a different color, or to change an amount of light that is transmitted through the lens (e.g., upon exposure to high intensity light (e.g., sunlight)).

Figure 4H shows an example operation to cure the resin material 432 in some embodiments, thereby forming the custom lens. A radiation source 424 (e.g., UV light source emitting UV light, a thermal source emitting thermal irradiation, etc.) is used to cure the resin 432, giving rise to the cured material 434. Alternatively, the mold 410c with the resin material 432 is heated to cure the resin material 432.

Figure 4I shows another example operation used to cure the resin material 432 in some embodiments, thereby forming the custom lens. A top cover 436 is placed in contact with the resin material 432 from Figure 4G. In some embodiment, the top cover 436 is used to set a thickness of the lens by forcing excess resin 432 out of the concave cavity of the mold 410c. When a bottom surface 438 of the top cover 436 is of optical quality, a second surface 440 of the resin 432 that is in contact with the bottom surface 438 will be cured to form a custom lens having a second surface (e.g., back/flat surface) of optical quality. In some embodiments, the top cover 436 is a glass block having complementary surface profile 442 that allows a snug fit with the mold 410c. The top cover 436 is transparent to UV radiation, allowing UV radiation to pass through the top cover 436 and reach the resin 432. In some embodiments, the surface 438 of the top cover 436 includes a layer of a release agent to facilitate the release (e.g., demolding) of the resin 432 from the top cover 436 after the resin has cured. After the top cover 436 is brought into contact with the resin 432, the source 424 (e.g., UV light source, thermal radiation source, etc.) is used to cure the resin 432. In some embodiments, the UV radiation is directed through the top cover 436. Alternatively, the mold 410c with the resin material 432 is heated to cure the resin material 432.

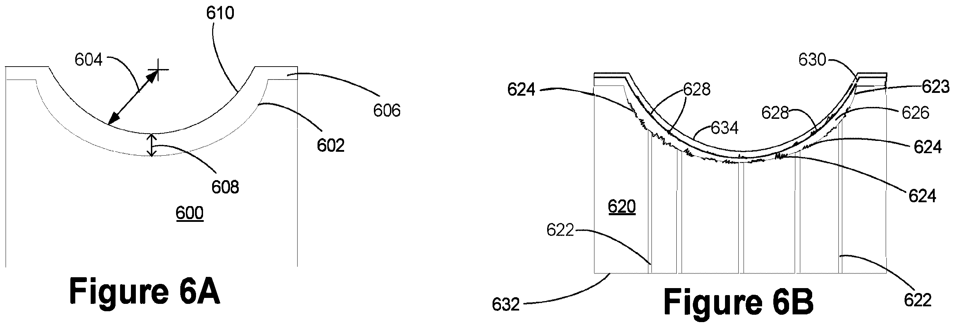

Figure 4J shows a custom lens 444 formed after the resin 432 in the concave cavity of the mold 410c has been cured. In some embodiments, the thin film layer 414 is chemically bonded to (e.g., fused with) the curved surface of the custom lens 444. In some embodiments, the thin film layer 414 has a certain stiffness so that minor features on the concave surface 412 of the mold 410c are not transferred to the thin film layer 414 while the thin film layer 414 conforms to the curvature of the concave surface 412. In some embodiments, the curved surface of the custom lens 444 does not include the thin film layer 414. For example, a layer of a release agent may be applied on the thin film layer 414 before the resin 432 is placed over the thin film layer 414 to facilitate the release of the cured material 434 from the thin film layer 414. In some configurations, the thin film layer 414 has a sufficient thickness so that minor features on the concave surface 412 do not change the surface profile of the resin 432, which allows the curved surface of the custom lens 444 to be of optical quality. In some embodiments, instead of the resin 432 being introduced into the concave cavity that is lined with the thin film 414 as shown in Figure 4G, the resin 432 is introduced into a concave cavity of the mold 410c having a hard optical coating, as described with respect to Figure 6B. In such cases, the curved surface of the custom lens 444 would not include any fused optical films or hard optical coatings.

In some embodiments, one or more surfaces of the custom lens 444 are processed (e.g., polished, cut, turned, etc.) to obtain a certain surface profile. In some embodiments, no surface of the custom lens 444 is processed.

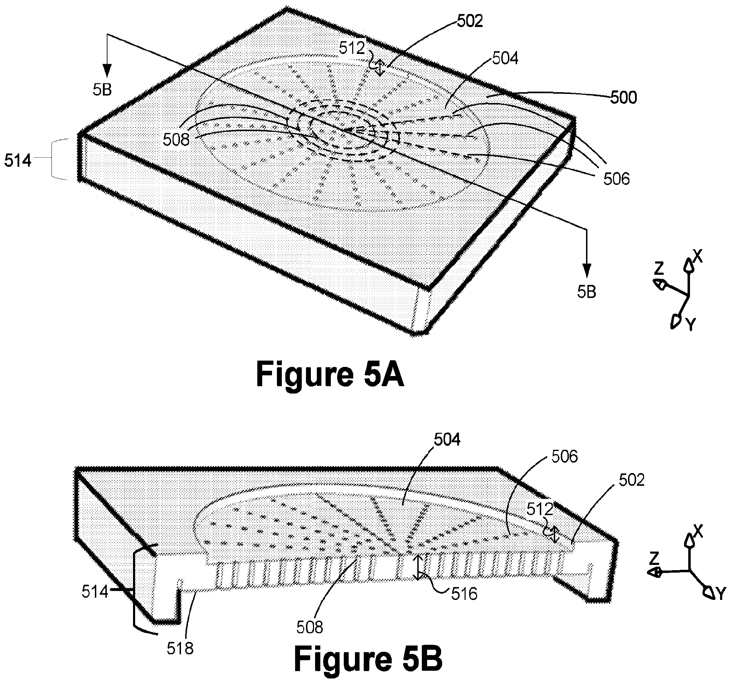

Figure 5A shows a perspective view of a mold 500 in accordance with some embodiments. The mold 500 includes a region 504 that has a customized surface profile. In some embodiments, the region 504 is surrounded by a sidewall 502 having a height 512. Height 512 may be substantially smaller than a thickness 514 of the mold 500. Within the region 504 is a plurality of channels extending through the mold (e.g., the plurality of channels defines through-holes). In some configurations, the plurality of channels extends through a thickness of the region 504 of the mold 500. In some embodiments, channels are formed along radial lines 506, and/or in concentric circles 508. A cross-sectional cut of the mold 500 along the line marked "5B" is shown in Figure 5B.

Figure 5B shows a sectional view of the mold 500 shown in Figure 5A in accordance with some embodiments. The channels extend through a thickness 516 of the region 504 of the mold 500. In Figure 5B, the thickness 516 is smaller than the thickness 514 of the mold 500. In some embodiments, the mold 500 is additively manufactured (e.g., 3D printed) and the region 504 defines a customized surface profile. In some embodiments, a thin film is placed over the region 504 and the channels (e.g., arranged along radial lines 506 or in circles 508) allow a vacuum applied from a side 518 of the mold 500 to pull the thin film toward the mold 500 (toward the customized surface profile of the region 504). The mold 500 has sufficient structural strength to withstand the forces generated by the vacuum. In some embodiments, a resin is disposed over the region 504, on top of the thin film. In some embodiments, a height of the resin in the region 504 is equal to or smaller than the height 512 of the sidewall 502.

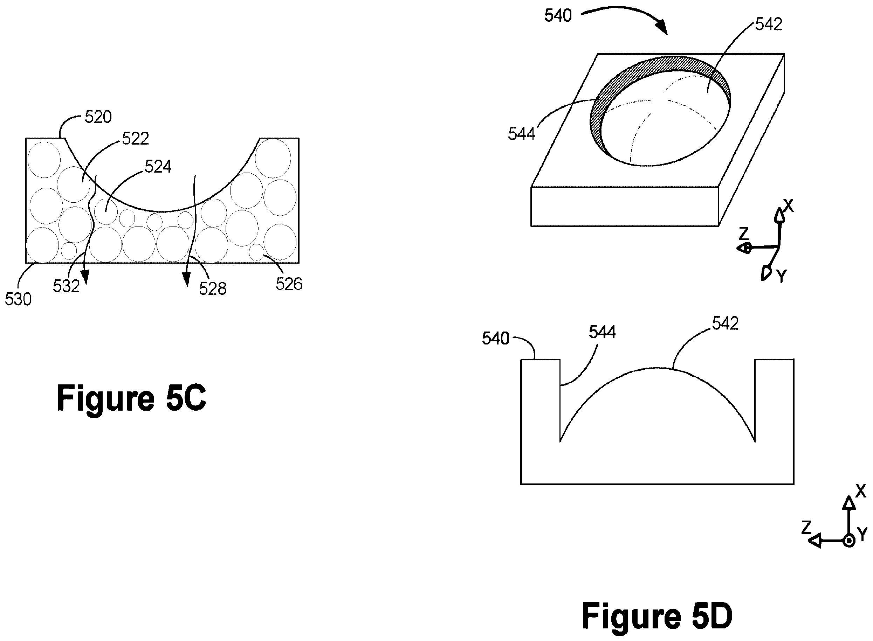

Figure 5C shows a schematic diagram of a porous mold 520 in accordance with some embodiments. In some embodiments, the porous mold 520 includes constituents having different sizes. For example, additive manufacturing processes create constituents 522, 524, and 526 having different sizes. Alternatively, the porous mold 520 is formed from constituents having substantially uniform sizes. In some embodiments, the constituents have non-uniform shapes. In some embodiments, the constituents have similar shapes, but the constituents do not allow tessellation (or tiling) so that a packing of the constituents creates gaps. This allows a thin film to be pulled when a vacuum is applied on a side 530 of the porous mold 520. For example, in Figure 5C, air is pulled out along path 528 and path 532 by a vacuum applied from the side 530 of the porous mold 520. In some embodiments, the porous mold 520 is used instead of the mold 500 with the plurality of channels. In some embodiments, a mold with both a porous region and a plurality of channels is used. In some embodiments, the porous region is separate from the plurality of channels (e.g., none of the channels are defined in the porous region). In some embodiments, at least one of the channels is defined in the porous region.

Figure 5D shows a perspective view (top) and a cross-sectional view (bottom) of a convex mold 540 in accordance with some embodiments. In some embodiments, the convex mold 540 has a curved surface 542 that protrudes along the x direction. The cross-sectional view is taken from a plane that includes an apex of a curved surface 542. In some embodiments, the curved surface 542 is surrounded by a sidewall 544. In some cases, a height of a topmost part of the curved surface 542 is equal to or less than a height (e.g., along the x-direction) of the sidewall 544. As a result, the sidewall 544 retains resin that is introduced into the convex mold 540. The curved surface 542 is used to produce a lens having a surface profile that corrects and/or compensates for optical aberrations in an eye of a user of the lens. The surface profile of the lens is complementary to the curved surface 542 of the mold 540. For example, a mold having a convex surface produces a lens having a complementary concave surface (e.g., the lens is a diverging lens having a negative dioptric value and generally corrects myopia (nearsightedness) or a meniscus lens with a concave surface and an opposing convex surface).

Figure 6A shows a schematic diagram illustrating a cross-section of a mold 600 in accordance with some embodiments. A surface 602 of the mold 600 has a radius of curvature 604, and supports a thin film 606 in contact with the surface 602. The thin film 606 has a sufficient thickness 608 so that an inner surface of the thin film 606 (opposite to a surface of the thin film in contact with the surface 602 of the mold 600) has a surface roughness less than the surface roughness of the surface 602. Thus, a combination of the mold 600 and the thin film 606 may be used as a mold having a higher quality surface (characterized by a lower surface roughness). A lens having a high optical power (e.g., a higher diopter) may have a smaller radius of curvature. To obtain a particular level of surface roughness, a thicker film may be used on a surface having a smaller radius, and a thinner film may be used on a surface having a larger radius of curvature.

Figure 6B shows an example of embodiments that include an additional hard optical coating. Figure 6B shows a plurality of channels 622 defined within the body of a mold 620. The mold 620 has a concave surface profile 623. In some embodiments, the channels 622 are spaced at regular intervals. In some embodiments, the channels 622 are distributed asymmetrically across the mold 620.

In some embodiments, the concave surface profile 623 includes features 624 that roughen the surface (e.g., the features 624 create varying degrees of surface roughness across the concave surface profile 623). An optical film 626 (e.g., a plastic optical film) is disposed on top of the mold 620. In some embodiments, the optical film 626 is formed of a dielectric elastomer. In some cases, due to the presence of features 624 that cause high surface roughness, features 628 (e.g., bumps or wrinkles) are formed on the optical film 626. In some embodiments, a hard optical coating 630 is added on top of the optical film 626 to smooth out the optical surface 634 associated with the mold 620 before a resin is introduced into the mold.

In some embodiments, the optical coating 630 is a thermally cured hard coating. In some embodiments, the optical coating 630 is a UV cured hard coating. In some embodiments, the optical coating 630 is deposited on the optical film 626 or formed on the optical film 626. Examples of hard optical coatings include diamond, sapphire, magnesium fluoride, titanium dioxide, zinc sulfide, etc.

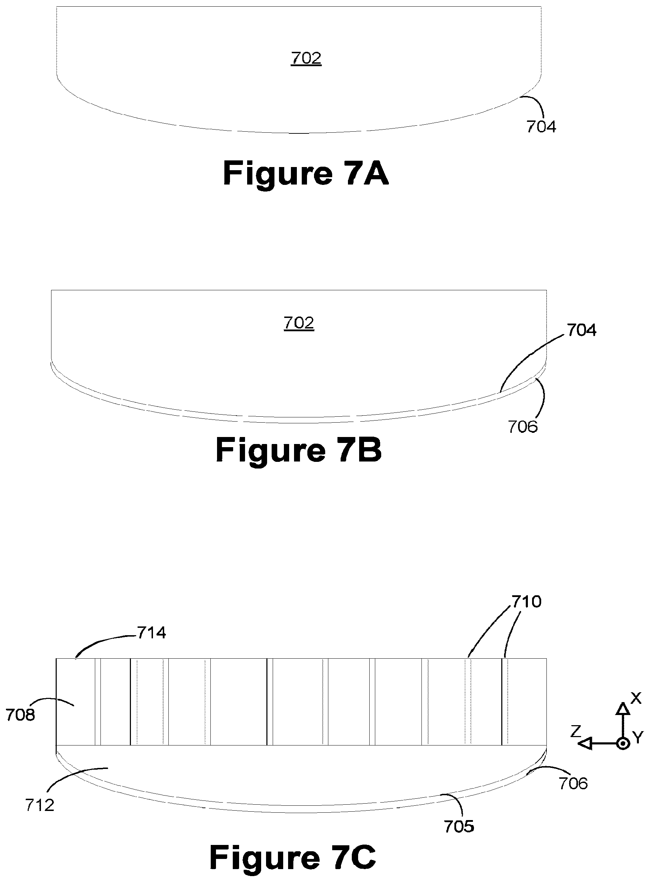

Figure 7A is a schematic diagram of a mold 702 in accordance with some embodiments. In some embodiments, the mold 702 is manufactured additively (e.g., the mold 702 is 3D printed). Unlike the mold 410c in Figure 4D, the mold 702 has a convex surface profile 704. In some embodiments, the convex surface profile 704 is characterized by a Zernike polynomial. In some embodiments, the Zernike polynomial includes lower order polynomials. In some embodiments, the lower order polynomials allow correction of first and second order aberrations such as astigmatism and defocus. In some embodiments, the convex surface profile 704 is characterized by a freeform surface. The freeform surface can be used to correct low order aberrations and higher order aberrations.

Figure 7B shows a schematic diagram of a thin film 706 in contact with the mold 702. In some embodiments, a vacuum is applied to pull the thin film 706 onto the convex surface profile 704 of the mold 702. In some embodiments, the thin film 706 includes a thin plastic film. In some embodiments, the surface roughness of the thin plastic film is less than 20 nm RMS. In some embodiments, a mold release is applied on an outer surface of the thin film 706. The mold releases helps to separate the thin film 706 from a cured material (e.g., a cured resin).

Figure 7C shows a combination of a mold 708 and a convex mold 712. In some configurations, the mold 708 is used as a back plate for the convex mold 712. The mold 708 includes a number of channels 710 or perforations. In some embodiments, the mold 708 is separable from the convex mold 712. In some embodiments, the convex mold 712 is additively manufactured. In some embodiments, the mold 708 is manufactured using non-additively (e.g., using a traditional machining operation, such as turning, milling, and drilling). In some embodiments, the mold 708 is manufactured additively to define the channels 710.

In some embodiments, the mold 708 and the convex mold 712 are additively manufactured as an integral unit. In some embodiments, the channels 710 extend only through the mold 708, and the convex mold 712 is formed from porous materials, similar to the porous mold 520 shown in Figure 5C. In such cases, a vacuum is applied from side 714 of the mold 708, drawing air through porous channels of the convex mold 712 and pulling the thin film 706 to contact a convex surface 705 of the convex mold 712. In some embodiments, the channels 710 extend from the mold 708 into the convex mold 712 (the extension into the convex mold 712 is not shown in Figure 7C). In some embodiments, the channels 710 extend up to the convex surface profile 704 of the convex mold 712, defining through-holes.

In some embodiments, a width of the channel 710 (e.g., along the z-direction) is between 0.01 mm to 2 mm. In some embodiments, a density of the channels 710 in the mold 708 is between 10-1000 channels/mm². In some embodiments, a vacuum is applied on a side 714 of the mold 708.

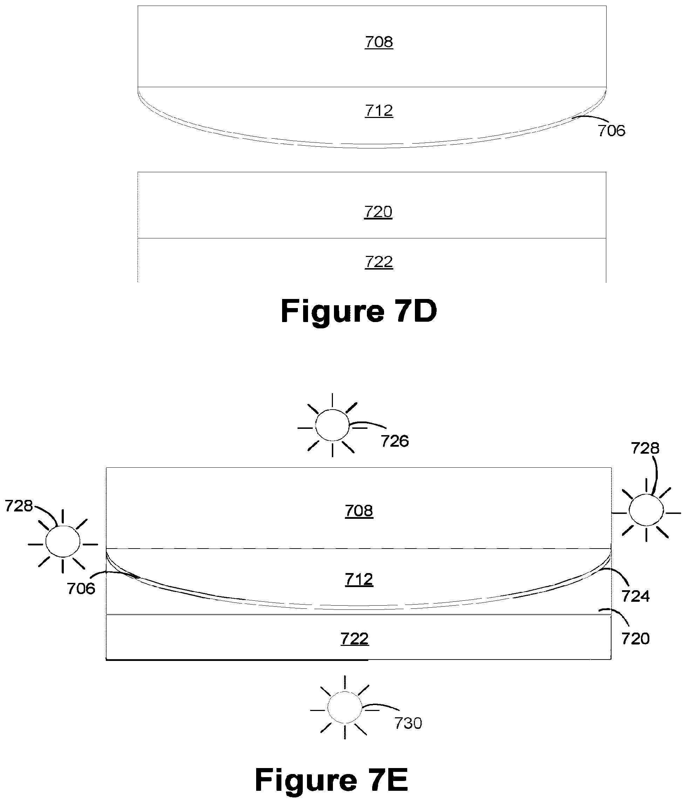

Figure 7D shows a layer of resin 720 disposed on a support 722. In some embodiments, the support 722 is a flat, planar substrate. In some embodiments, the substrate has side walls to define a reservoir to hold the layer of resin 720. In some embodiments, the resin 720 includes poly-methyl methacrylate (PMMA), cyclic olefin copolymer (COC), cyclo-olefin Polymer (COP), polycarbonate, polystyrene, or polyurethane.

Figure 7E shows the convex mold 712 immersed in the resin 720 in accordance to some embodiments. The thin film 706 is in direct contact with the resin 720, which takes on a surface profile complementary to the convex surface profile of the thin film 706 (e.g., the resin 720 has a concave surface 724). In some embodiments, the resin 720 is cured while in contact with the convex mold 712 (directly, or indirectly through at least the thin film 706). In some embodiments, the thin film 706 is coated with a release agent that help release the thin film 706 from the resin.

In some embodiments, a light or heat source 726 emitting radiation (e.g., light, heat) is positioned above the mold 708 to cure the resin 720. In such embodiments, the mold 708, the convex mold 712, and the thin film 706 are at least partially transparent to the curing radiation (e.g., transmits the curing radiation, such as ultraviolet light). In some embodiments, one or more sources 728 (e.g., light sources, heat sources) emitting radiation that cures a resin are positioned on one or more sides (e.g., left, right, etc.) of the resin 720. In some embodiments, a source 730 (e.g., light source, heat source) emitting radiation that cures a resin is positioned below the support 722. In such embodiments, the support 722 is at least partially transparent to the radiation (e.g., transmits the radiation).

In some embodiments, any combination of the light or heat sources 726, 728, and 730 is used. In some embodiments, one or more of: light or heat sources 726, 728, and/or 730 are used at the same time to cure the resin 720.

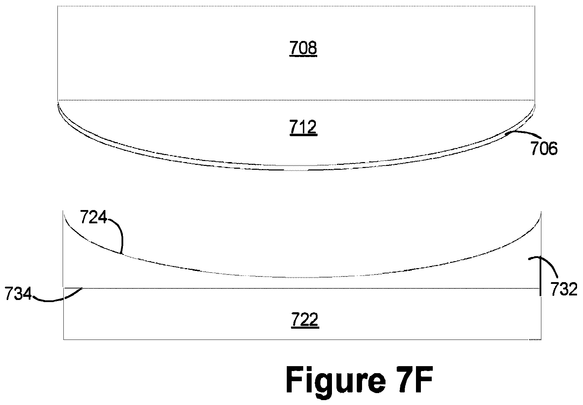

Figure 7F shows the customized lens 732 after the curing process. In some cases, a surface quality of the concave surface 724 of the customized lens 732 is at least as good as the surface roughness of the thin film 706. The customized lens 732 is removed from the support 722. In some embodiments, the support 722 has a sufficiently low surface roughness to ensure that a surface 734 of the customized lens 732 is of optical quality. In some embodiments, a thin film (e.g., similar to thin film 706) is placed on the support 722, in contact with the resin 720 (and the subsequently cured customized lens 732) to provide the surface 734 with a low surface roughness (e.g., a surface of optical quality).

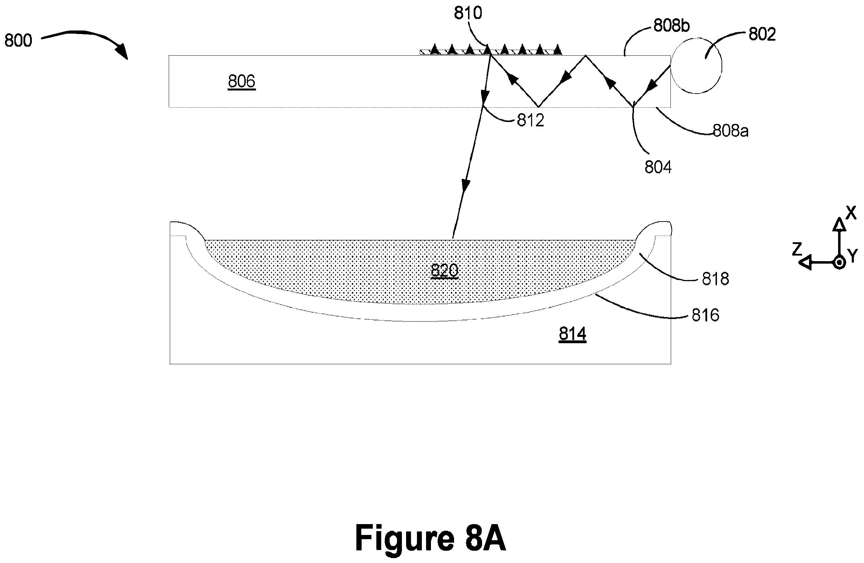

Figure 8A shows a cross-sectional view of a system 800 in which radiation (e.g., UV radiation) for curing a resin is coupled in from a periphery of a mold in accordance with some embodiments.

The system 800 includes a light source 802 and a waveguide 806. The light source 802 emits radiation 804 that is coupled into the waveguide 806. The radiation 804 reflects off a lower surface 808a of the waveguide 806 and is directed toward an upper surface 808b of the waveguide 806, which, in turn, reflects the radiation 804 toward the lower surface 808a, so that the radiation 804 propagates within the waveguide 806. Extraction features 810 are disposed on a surface (e.g., in a region on the upper surface 808b) of the waveguide 806. Prior to impinging on the extraction features 810, the radiation 804 is internally reflected within the waveguide 806 (e.g., an incidence angle of the radiation 804 with respect to each of the lower surface 808a and the upper surface 808b is equal to or greater than a critical angle).

The extraction features 810 change the direction of the radiation 804, and as a result, the radiation is coupled out of the waveguide 806 at a location 812 at the lower surface 808a of the waveguide 806. For example, the radiation 804 impinges on the lower surface 808a of the waveguide 806 at an angle greater than the critical angle so that the radiation is coupled out of the waveguide 806. The radiation that is coupled out of the waveguide 806 is then directed toward a resin 820 contained within a concave cavity in a mold 814. The resin 820 is disposed on top of an optical thin film layer 818 lining a concave surface 816 of the mold 814.

In some embodiments, the system 800 is used in conjunction with the source 424 in Figure 4H (e.g., UV radiation source, thermal heat source) that is positioned above (e.g., along the x direction) the resin 820. By designing extraction features 810 at selected locations, the system 800 allows a radiation intensity profile that is more uniform to reach the resin 820. For example, the concave surface profile 816 of the mold 814 results in a thicker layer of resin 820 in the middle of the mold 814. Additional curing radiation is directed toward the middle portion of the resin 820 by placing extraction features at appropriate locations on the waveguide 806.

For example, in some embodiments, when the curing radiation source is positioned directly above a middle portion of the resin 820, and there is insufficient radiation for the resin near the circumference of the mold 814, extraction features are designed to increase extraction of the radiation 804 (from the source 802) around the edge (e.g., circumference) of the mold 814.

In some embodiments, the waveguide 806 has a shape of a circular disc. In some embodiments, a plurality of radiation sources 802 is arranged around the circumference of the circular disc of the waveguide. Such "side-illumination" by the UV radiation for curing the resin allows the custom lens to be cured (e.g., inward) from a circumference of the lens.

In some embodiments, the waveguide 806 remains separated from the resin 820 (e.g., the waveguide 806 is not in contact with the resin 820). In some embodiments, the waveguide 806 is in contact with the resin 820 (e.g., similar to the top cover 436 shown in Figure 4I).

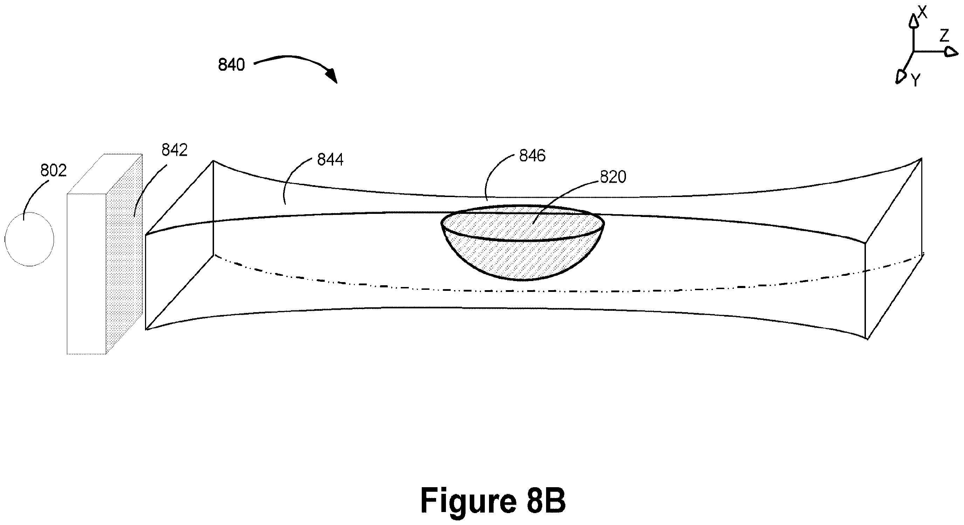

Figure 8B shows a perspective view of a system 840 in accordance with some embodiments, in which the UV radiation for curing a resin is delivered in the form of a light sheet. The system 840 includes the radiation source 802 and an optical element 842. The optical element 842 focuses radiation emitted by the source 802 along only one axis (e.g., y-axis). In some embodiments, the optical element 842 is a cylindrical lens.

In some embodiments, a light sheet 844 is produced by the cylindrical lens 842, which focuses radiation emitted by the source 802 only along the y-axis, producing a beam waist 846 of the light sheet 844. In some embodiments, the beam waist 846 spans a position where the resin 820 is positioned. For clarity of illustrating the light sheet 844, the mold 814 (e.g., shown in Figure 8A) in which the resin 820 is deposited is not shown in Figure 8B. In some embodiments, the cylindrical lens 842 does not focus light along the x-axis.

In some embodiments, the radiation source 802 matches a height (e.g., along the x direction) of the resin 820. For example, light emitted by the radiation source 802 may have a height that corresponds to the height of the resin 820. In some embodiments, the cylindrical lens 842 has a focal length that gives a depth of focus that encompasses the width (e.g., the diameter along the z direction) of the resin 820. In this way, the system 840 delivers higher intensity light in the focal region of the cylindrical lens 842 to the resin 820. In some embodiments, the higher intensity light decreases a duration required to cure the resin 820, improving a manufacturing throughput of the system.

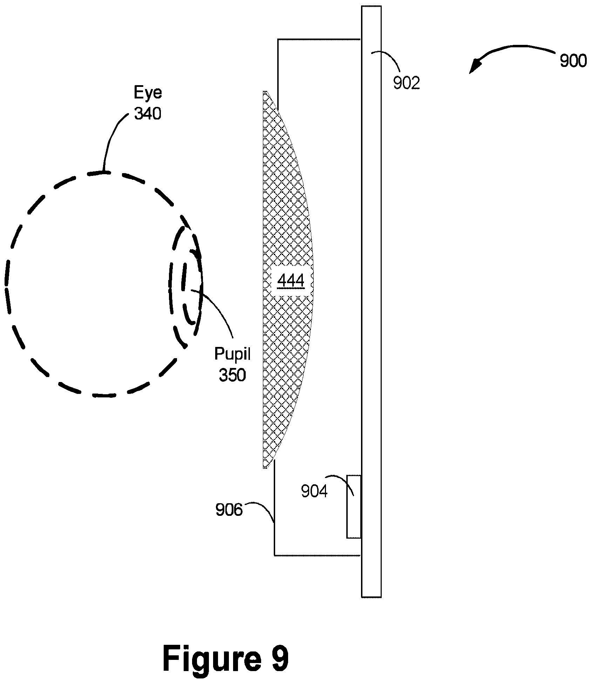

Figure 9 shows a head-mounted display system 900 having an integrated eye-tracker and a custom prescription lens. The system 900 includes a display array 902 and an eye tracker 904. In some embodiments, the display array 902 is a transmissive optical element, for example, suitable for AR applications. In some embodiments, the display array 902 is an emission display array 902 suitable for VR applications. The system 900 includes an eye-tracker 904, and a mounting system 906 for holding a customized lens (e.g., the customized lens 444 described with reference to Figure 4J). In some embodiments, the resin for forming the customized lens 444 is cured while a resin, a precursor of the customized lens 444, is positioned directly on a substrate containing the eye tracker 904. In some embodiments, in addition to the customized lens 444, other optical components, such as illumination elements, and various coatings are manufactured *in situ* with the customized prescription lens to produce an optical stack that is readily incorporated into the head mounted display system 900. In some embodiments, the system 900 provides an integrated display system having eye-tracking functionalities that additionally includes a customized prescription lens for a user's eye 340.

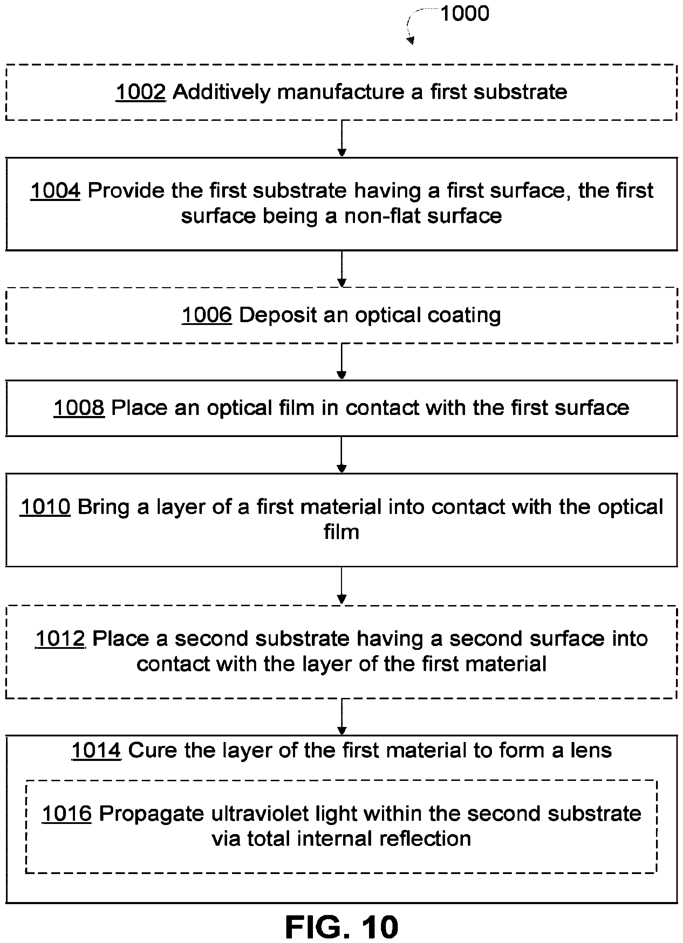

Figure 10 depicts an example process for manufacturing a custom prescription lens in accordance with some embodiments. For explanatory purposes, the various blocks of example process 1000 are described herein with reference to Figures 1-9, and the components and/or processes described herein. In some implementations, one or more of the blocks is implemented apart from other blocks, and by one or more different devices. Further for explanatory purposes, the blocks of example process 1000 are described as occurring in serial, or linearly. However, in some embodiments, multiple blocks of example process 1000 occur in parallel. In addition, the blocks of example process 1000 need not be performed in the order shown and/or one or more of the blocks of example process 1000 need not be performed.

Step 1004 of the example process 1000 includes providing a first substrate having a first surface, the first surface being a non-flat surface. In some embodiments, process 1000 includes step 1002 of additively manufacturing the first substrate. In some embodiments, process 1000 includes step 1006 of depositing an optical coating on the first substrate at step 1006. Step 1008 of the example process 1000 includes placing an optical film in contact with the first surface. Step 1010 of the example process 1000 includes bringing a layer of a first material into contact with the optical film. In some embodiments, process 1000 includes step 1012 of placing a second substrate having a second surface in contact with the layer of the first material. Step 1014 of the example process 1000 includes curing the layer of the first material to form a lens. In some embodiments, process 1000 includes step 1016 of propagating ultraviolet light within the second substrate via total internal reflection.

In light of these principles, we turn to certain embodiments.

In accordance with some embodiments, a method of making a customized lens includes providing a first substrate having a first surface, the first surface being a non-flat surface (e.g., Figure 4D). In some embodiments, the first substrate is a mold, and the first surface is a free-form surface. The method includes placing an optical film in contact with the first surface (e.g., Figure 4F). In some embodiments a substantial portion (e.g., more than 50%, 70%, 90%, 95%, or 99%) of the non-flat surface is in contact with the optical film. In some embodiments, the optical film is elastic (or elastomeric) so that the optical film can stretch while the optical film is placed over the first surface (e.g., during vacuum forming). The method includes bringing a layer of a first material into contact with the optical film (e.g., Figure 4G); and curing the layer of the first material to form a lens (e.g., Figure 4H, Figure 4I). The optical film has a lower surface roughness than the first surface. In some embodiments, the optical film is a plastic film and a surface roughness of plastic film is better than 20 nm RMS.

In some embodiments, the customized lens is configured to correct optical aberrations of a user of the lens. In some embodiments, the method includes additively manufacturing the first substrate having the first surface. In some embodiments, additively manufacturing the first substrate includes 3D printing the first substrate. In some embodiments, the first substrate is porous (e.g., Figure 5C). For example, in some embodiments, the first substrate is a plastic. In some embodiments, channels are defined in the first substrate (e.g., Figures 5A-5B).

In some embodiments, the method includes applying a vacuum through the first substrate. In some embodiments, the first material includes one or more monomers. In some embodiments, the optical film is made of a second material, and the first material subsequent to the curing and the second material have matching refractive indices. In some embodiments, the refractive indices of the two materials differ by less than, for example, +/- 5%, +/- 2%, or +/- 0.5 %.

In some embodiments, the optical film includes at least one of: poly-methyl methacrylate (PMMA), cyclic olefin copolymer (COC), cyclo-olefin Polymer (COP), or polycarbonate. In some embodiments, the first material includes at least one of: poly-methyl methacrylate (PMMA), cyclic olefin copolymer (COC), cyclo-olefin Polymer (COP), polycarbonate, polystyrene, or polyurethanes. In some embodiments, the optical film includes an optically specular surface. In some embodiments, a thickness of the optical film is 100 microns or greater (between 100 - 500 microns, e.g., less than 1 mm). In some embodiments, the thickness of the optical film is a function of a curvature of the first surface.

In some embodiments, the method further includes placing a second substrate having a second surface into contact with the layer of the first material (e.g., Figure 4I). In some embodiments, the second surface is a planar surface (e.g., Figure 4I). In some embodiments, placing a second substrate having a second surface into contact with the layer of the first material includes placing the second surface over the layer of the first material. In some embodiments, the second surface is in contact with the layer of the first material. In some embodiments, the first substrate having the first surface is pressed into a layer of the first material to make an imprint of the first surface in the first material. In some embodiments, the first material is cured while the first substrate having the first surface is in contact with the first material. In some embodiment, the lens has a complementary profile to the first surface.

In some embodiments, the second surface forms an optically specular flat surface of the lens.

In some embodiments, curing includes propagating ultraviolet light within the second substrate via total internal reflection. In some embodiments, the second substrate includes one or more features on a surface opposite to the second surface to output at least a portion of the ultraviolet light propagating within the second substrate. In some embodiments, curing comprises heating the first material.

In some embodiments, the method includes depositing an optical (e.g., hard) coating on the optical film. In some embodiments, the method includes adding a lens tinting chemical into the resin. In some embodiments, the first surface is a concave surface. In some embodiments, the first surface is a convex surface.

In another aspect, a method includes providing a first optical element; and forming on the lens while the first material is in contact with the first optical element so that the formed lens is integrated with the first optical element. In some embodiments, the first optical element includes an optical element of an eye tracking device.

In another aspect, a lens includes an optical film defining a first surface of the lens, the first surface being a non-flat surface; and a cured material in contact with the first surface and defining a second surface of the lens opposite to the first surface.

In some embodiments, the second surface is a flat surface. In some embodiments, a thickness of the optical film is 100 microns or greater. In some embodiments, the thickness of the optical film is between 100 - 500 microns. In some embodiments, the cured material and the optical film have matching refractive indices.

The foregoing description, for purpose of explanation, has been described with reference to specific embodiments. However, the illustrative discussions above are not intended to be exhaustive or to limit the scope of the claims to the precise forms disclosed. Many modifications and variations are possible in view of the above teachings. The embodiments were chosen in order to best explain the principles underlying the claims and their practical applications, to thereby enable others skilled in the art to best use the embodiments with various modifications as are suited to the particular uses contemplated.

## Claims

1. A method of making a customized lens, the method comprising:
providing a first substrate having a first surface, the first surface being a non-flat surface;
placing an optical film in contact with the first surface;
bringing a layer of a first material into contact with the optical film; and
curing the layer of the first material to form a lens,
wherein the optical film has a lower surface roughness than the first surface.

2. The method of claim 1, further comprising additively manufacturing the first substrate having the first surface.

3. The method of claim 1 or claim 2, wherein the first substrate is porous; and/or preferably wherein channels are defined in the first substrate.

4. The method of claim 1, claim 2 or claim 3, including applying a vacuum through the first substrate.

5. The method of any one of the preceding claims, wherein the first material includes one or more monomers.

6. The method of any one of the preceding claims, wherein the optical film is made of a second material, and the first material subsequent to the curing and the second material have matching refractive indices; and preferably wherein the optical film includes at least one of: poly-methyl methacrylate (PMMA), cyclic olefin copolymer (COC), cyclo-olefin Polymer (COP), or polycarbonate.

7. The method of any one of the preceding claims, wherein the first material includes at least one of: poly-methyl methacrylate (PMMA), cyclic olefin copolymer (COC), cyclo-olefin Polymer (COP), polycarbonate, polystyrene, or polyurethanes.

8. The method of any one of the preceding claims, wherein the optical film includes an optically specular surface.

9. The method of any one of the preceding claims, wherein a thickness of the optical film is 100 microns or greater; and preferably wherein the thickness of the optical film is a function of a curvature of the first surface.

10. The method of any one of the preceding claims, further comprising placing a second substrate having a second surface into contact with the layer of the first material; and preferably wherein:
i. the second surface forms an optically specular flat surface of the lens; and/or
ii. curing comprises propagating ultraviolet light within the second substrate via total internal reflection.

11. The method of any one of the preceding claims, further comprising depositing an optical coating on the optical film.

12. A method, comprising:
providing a first optical element; and
forming a lens according to the method of claim 1 while the first material is in contact with the first optical element so that the formed lens is integrated with the first optical element.

13. A lens, comprising:
an optical film defining a first surface of the lens, the first surface being a non-flat surface; and
a cured material in contact with the first surface and defining a second surface of the lens opposite to the first surface.

14. The lens of claim 13, wherein a thickness of the optical film is 100 microns or greater.

15. The lens of claim 13 or claim 14, wherein the cured material and the optical film have matching refractive indices.
